# EUROPEAN PATENT SPECIFICATION

(11) **EP 3 586 062 B1**
(45) Date of publication and mention of the grant of the patent: **08.05.2024**
(21) Application number: 18708289.6
(22) Date of filing: 15.02.2018
(51) Int. Cl.: F23R 3/34, F23R 3/06

(54) **COMBUSTION SYSTEM WITH AXIALLY STAGED FUEL INJECTION**
VERBRENNUNGSSYSTEM MIT AXIAL GESTUFTER KRAFTSTOFFEINSPRITZUNG
SYSTÈME DE COMBUSTION À INJECTION DE CARBURANT AXIALEMENT ÉTAGÉ

(30) Priority: 24.02.2017 US 201715441421
(43) Date of publication of application: 01.01.2020
(73) Proprietor: General Electric Technology GmbH, 5400 Baden (CH)
(72) Inventor: MCMAHAN, Kevin Weston, Greenville, SC 29615 (US); BERRY, Jonathan Dwight, Greenville, SC 29615 (US); HUGHES, Michael John, State College, PA 16803 (US)
(74) Representative: Novagraaf Group
(86) International application number: PCT/US2018/018442
(87) International publication number: WO 2018/156419

(56) References cited:
- US-A1- 2014 260 272
- US-A1- 2014 260 303
- US-B2- 8 276 389

## Description

### FIELD

The present invention generally involves a combustion system of a gas turbine. More specifically, the invention relates to a combustion system including axially staged fuel injection.

### BACKGROUND

A typical turbomachine includes a compressor to compress inlet air, a combustor in which the compressed inlet air is combusted along with fuel, a turbine in which products of the combustion are receivable for power generation purposes and a transition piece. The transition piece is fluidly interposed between the combustor and the turbine.

In some cases, the typical turbomachine is configured to support axially staged or late lean injection. In these cases, a secondary fuel-air mixture is injected into downstream sections of the combustor or the transition piece in order to cause secondary combustion within the downstream sections of the combustor or the transition piece. This secondary combustion tends to reduce emissions of pollutants, such as oxides of nitrogen.
US 2014/0260303 discloses a duct section of a combustor section including an axially staged combustion system, the duct section comprising an axially oriented primary fuel nozzle, a primary combustion zone defined within a first duct downstream from the primary fuel nozzle and a conical duct disposed downstream from the primary combustion zone. The conical duct receives an aft end of the cylindrical duct. A plurality of fuel injectors oriented radially inwardly with respect to an axial centerline of the duct section and disposed downstream from the primary combustion zone are provided, wherein each fuel injector of the plurality of fuel injectors provides for injection of a secondary fuel-air mixture into the hot gas path, wherein one or more fuel injectors of the plurality of fuel injectors is distributed along at least one of the conical duct. An other related duct section of a combustor is disclosed in US 2014/0260272.

### BRIEF DESCRIPTION

The herein claimed invention resides in the subject matter set forth in the claims. Aspects and advantages are set forth below in the following description, or may be obvious from the description, or may be learned through practice.

Those of ordinary skill in the art will better appreciate the features and aspects of such embodiments of the invention, and others, upon review of the specification.

### BRIEF DESCRIPTION OF THE DRAWINGS

A full and enabling disclosure of various embodiments of the invention, including the best mode thereof to one skilled in the art, is set forth more particularly in the remainder of the specification, including reference to the accompanying figures, in which:
FIG. 1 is a functional block diagram of an exemplary gas turbine that may incorporate various embodiments of the present invention;
FIG. 2 is an upstream or aft to forward schematic representation of a ducting arrangement of a combustion section that may incorporate various embodiments of the present invention;
FIG. 3 is a perspective view illustrating an exemplary duct section of the ducting arrangement shown in FIG. 2, according to various embodiments of the present invention;
FIG. 4 is a cross sectioned side view of a portion of the duct section as shown in FIG. 3, according various embodiments of the present invention;
FIG. 5 is a perspective view illustrating an exemplary duct section of the ducting arrangement shown in FIG. 2, according to various embodiments of the present invention; and
FIG. 6 is a cross sectioned side view of a portion of the duct section as shown in FIG. 5, according various embodiments of the present invention.

### DETAILED DESCRIPTION

Reference will now be made in detail to present embodiments of the invention, one or more examples of which are illustrated in the accompanying drawings. The detailed description uses numerical and letter designations to refer to features in the drawings. Like or similar designations in the drawings and description have been used to refer to like or similar parts of the disclosure.

As used herein, the terms "first," "second," and "third" may be used interchangeably to distinguish one component from another and are not intended to signify location or importance of the individual components. The terms "upstream" and "downstream" refer to the relative direction with respect to fluid flow in a fluid pathway. For example, "upstream" refers to the direction from which the fluid flows, and "downstream" refers to the direction to which the fluid flows. The term "radially" refers to the relative direction that is substantially perpendicular to an axial centerline of a particular component, the term "axially" refers to the relative direction that is substantially parallel and/or coaxially aligned to an axial centerline of a particular component, and the term "circumferentially" refers to the relative direction that extends around the axial centerline of a particular component.

The terminology used herein is for the purpose of describing particular embodiments only and is not intended to be limiting. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

Each example is provided by way of explanation, not limitation. In fact, it will be apparent to those skilled in the art that modifications and variations can be made without departing from the scope of the invention.

For instance, features illustrated or described as part of one embodiment may be used on another embodiment to yield a still further embodiment. Thus, it is intended that the present disclosure covers such modifications and variations as come within the scope of the appended claims. Although exemplary embodiments of the present invention will be described generally in the context of a combustor for a land based power generating gas turbine for purposes of illustration, one of ordinary skill in the art will readily appreciate that embodiments of the present invention may be applied to any style or type of combustor for a turbomachine and are not limited to combustors or combustion systems for land based power generating gas turbines unless specifically recited in the claims.

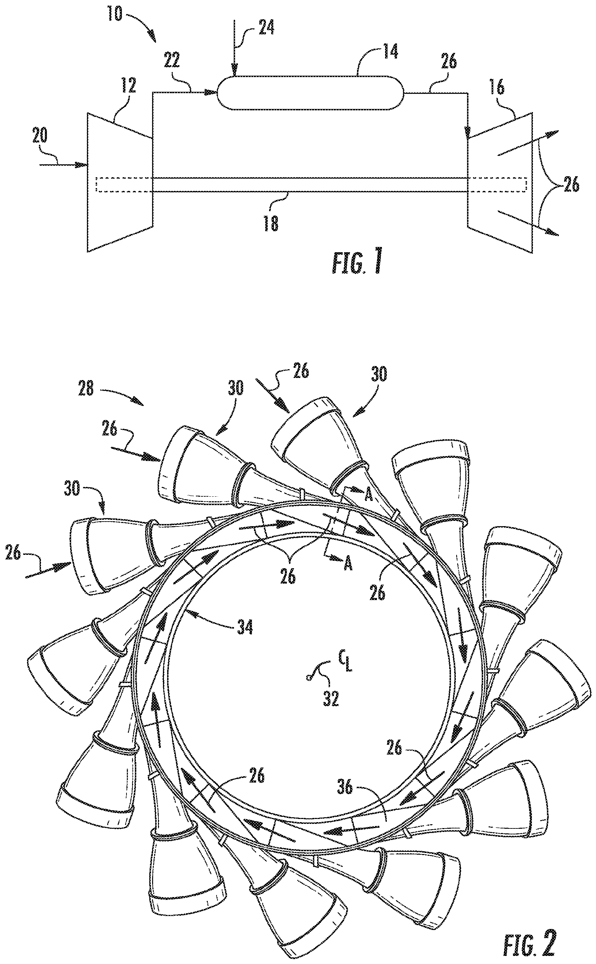

Referring now to the drawings, FIG. 1 illustrates a schematic diagram of an exemplary gas turbine 10. The gas turbine 10 generally includes a compressor 12, a combustion section 14 having a plurality of annularly arranged can combustors (not shown) disposed downstream of the compressor 12 and a turbine 16 disposed downstream of the combustion section 14. Additionally, the gas turbine 10 may include one or more shafts 18 that couple the compressor 12 to the turbine 16.

During operation, air 20 flows into the compressor 12 where the air 20 is progressively compressed, thus providing compressed or pressurized air 22 to the combustion section 14. At least a portion of the compressed air 22 is mixed with a fuel 24 within each can combustor of the combustion section 14 and burned to produce combustion gases 26. The combustion gases 26 flow from the combustor 14 into the turbine 16, wherein energy (kinetic and/or thermal) is transferred from the combustion gases 26 to rotor blades (not shown), thus causing shaft 18 to rotate. The mechanical rotational energy may then be used for various purposes such as to power the compressor 12 and/or to generate electricity. The combustion gases 26 may then be exhausted from the gas turbine 10.

FIG. 2 provides an upstream or aft to forward schematic representation of a ducting arrangement 28 of the combustion section 14 that may be used with properly oriented can combustors (not shown). The ducting arrangement 28 includes a plurality of discrete duct sections 30 annularly arranged about a common axial centerline such as an axial centerline 32 of the gas turbine 10. Each duct section 30 may merge into a common duct structure 34. The common duct structure 34 may include and/or define an annular chamber 36 into which all of the combustion gas 26 flows.

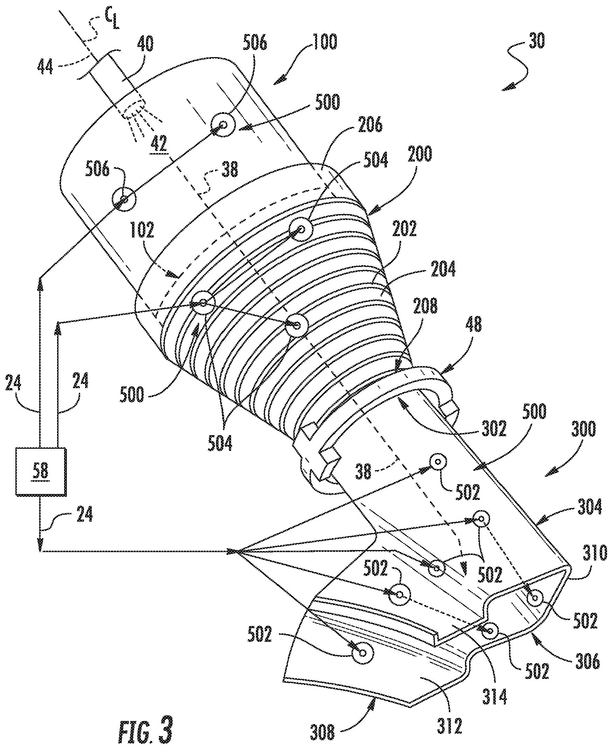

FIG. 3 provides a perspective view illustrating an exemplary duct section 30 according to various embodiments of the present invention. As shown in FIG. 3, each duct section 30 defines a respective hot gas path 3 δ (shown in hidden lines) for guiding the combustion gases 26 toward an inlet (not shown) of the turbine 16 (FIG. 1).

According to the invention as claimed herein, each duct section 30 includes, in serial flow order, a cylindrical liner or duct 100, a conical liner or duct 200 coupled to and positioned immediately downstream from and/or adjacent to the cylindrical duct 100, and an integrated exit piece 300 disposed downstream from the conical duct 200. The cylindrical duct 100 is disposed downstream and/or extends downstream from one or more primary or axially oriented fuel nozzles 40.

The cylindrical duct 100 at least partially defines a primary combustion or reaction zone 42 that is downstream from the primary fuel nozzle(s) 40. The cylindrical duct 100, the conical duct 200 and the integrated exit piece 300 together at least partially form the hot gas path 38 of the respective duct section 30. Each respective integrated exit piece 300 is interconnected with two circumferentially adjacent integrated exit pieces 300 such that the collective of integrated exit pieces 300 forms the annular chamber 36 (FIG. 2) into which the combustion gases 26 flow just upstream from the turbine 16.

In particular embodiments, as shown in FIG. 3, the conical duct 200 may include various flow turbulators 202 that extend radially outwardly from an outer surface 204 of the conical duct 200. In particular embodiments, an upstream or forward end 206 of the conical duct 200 may be substantially cylindrical. In particular embodiments, the conical duct 200 diverges radially inwardly towards an axial centerline 44 of the respective duct section 30 between the forward end 206 and an aft end 208 of the conical duct 200.

In particular embodiments, as illustrated in FIG. 3, each integrated exit piece 300 may include an inlet chamber 304 having a generally rectangular cross-section and a downstream end 306 disposed downstream from the inlet end 302. A connection segment or flange 308 is formed integrally with and/or connected to the inlet chamber 304 and is located at a radially inner side of the integrated exit piece 300. The connection segment 308 has a generally rectangular cross-section and may be configured to form a junction with an upstream adjacent integrated exit piece 300 (not shown). In particular embodiments, the connection segment 308 includes a radially extending sidewall 310 (FIG. 3), an aft extending inner wall 312 and an aft extending outer wall 314. A description of a known integrated exit piece of the type that may be used in combination with the present invention is described in U.S. Pat. No. 8,276,389 to Charron.

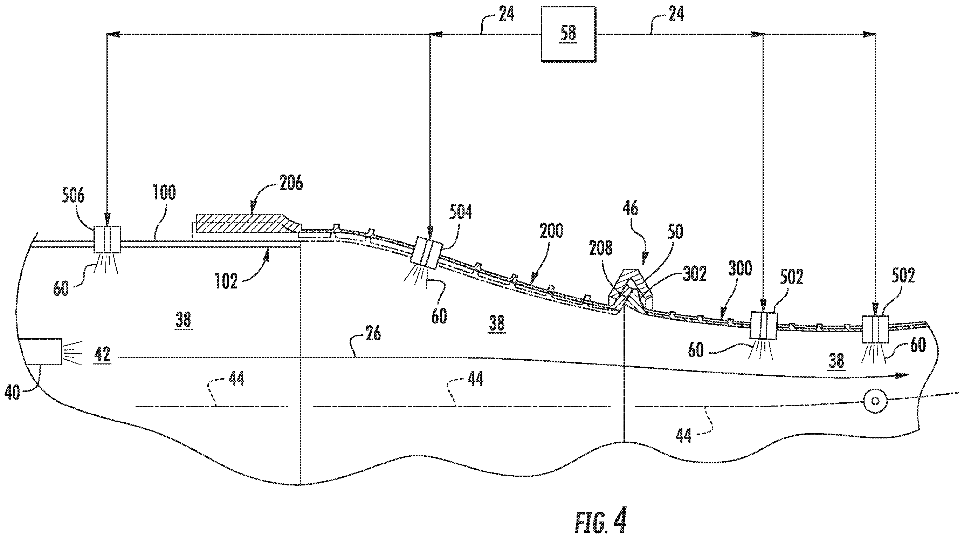

FIG. 4 provides a cross-sectioned side view of a portion of the duct section 30 as shown in FIG. 3, according various embodiments of the present invention. In particular embodiments, as shown in FIG. 4, an aft end 102 of the cylindrical duct 100 may extend into the forward end 206 of the conical duct 200. A joint 46 may be formed between the aft end 208 of the conical duct 200 and a forward or inlet end 302 of the integrated exit piece 300. As shown in FIGS. 3 and 4 collectively, a locking ring 48 or other mechanical fastening means may secure the aft end 208 of the conical duct 200 to the inlet end 302 of the integrated exit piece 300.

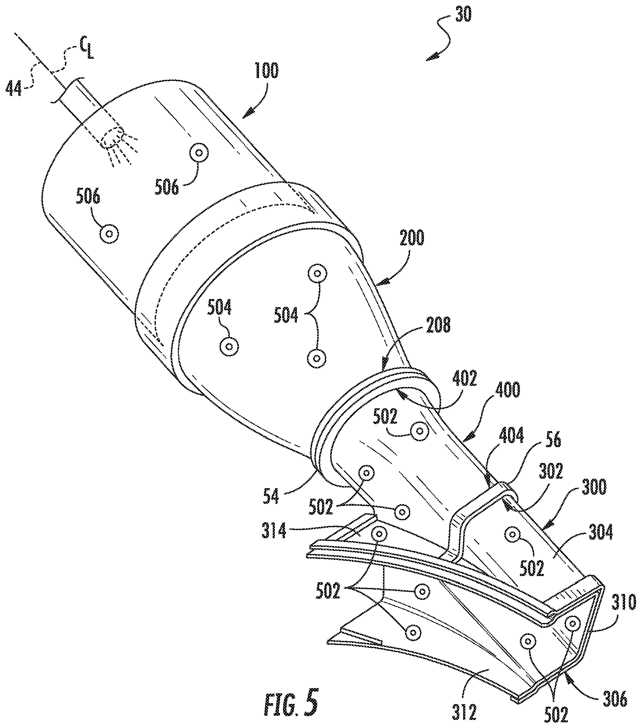

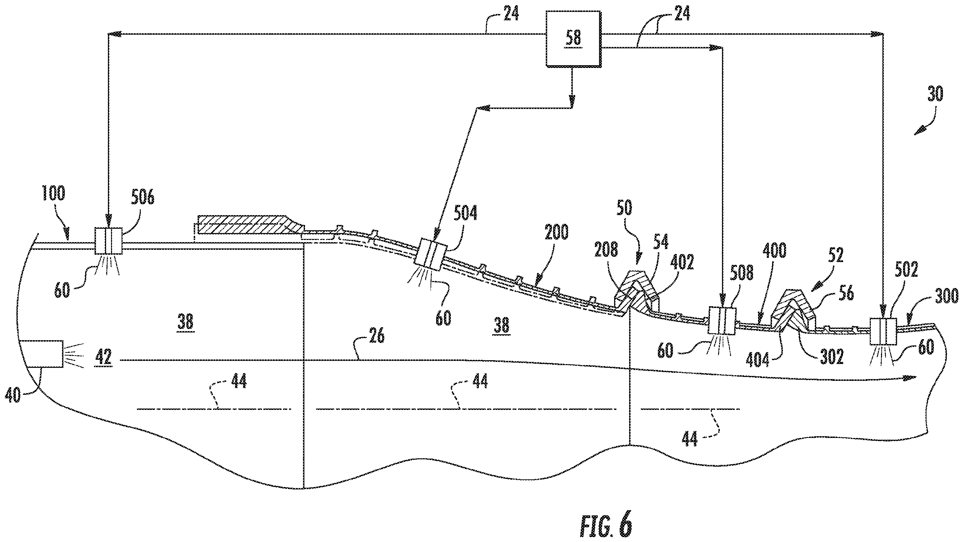

FIG. 5 provides a perspective view of an exemplary duct section 30 according to one or more embodiments of the present disclosure. FIG. 6 provides a cross-sectioned side view of a portion of the duct section 30 as shown in FIG. 5, according various embodiments of the present disclosure. In particular embodiments, as shown in FIGS. 5 and 6 collectively, the duct section 30 may include, in serial flow order, the cylindrical duct 100, the conical duct 200, an intermediate duct or liner 400 and the integrated exit piece 300.

A forward end 402 of the intermediate duct 400 may be connected to or joined with the aft end 208 of the conical duct 200 at joint 50. An aft end 404 of the intermediate duct 400 may be connected to or joined with the inlet end 302 of the integrated exit piece 300 at joint 52. As shown in FIGS. 5 and 6 collectively, a first locking ring 54 may secure the aft end 208 of the conical duct 200 to the forward end 402 of the intermediate duct 400 at joint 50. A second locking ring 56 may secure the aft end 404 of the intermediate duct 400 to the inlet end 302 of the integrated exit piece 300 at joint 52. The intermediate duct 400 may serve any or all of several functions, including: collimating the combustion gas flow entering the integrated exit piece 300; transitioning a cross section of the combustion gas flow entering the intermediate duct 400 from the aft end 208 of the conical duct 200 from circular to more of a quadrilateral shape with rounded corners upstream from the integrated exit piece 300 and further accelerating the combustion gasses 26 in addition to an acceleration that occurs within the conical duct 200.

In various embodiments, as shown in FIGS. 3 through 6 collectively, one or more of the duct sections 30 includes a plurality of fuel injectors 500 distributed or axially staged downstream from the primary fuel nozzle(s) 38 and the primary combustion zone 40. The plurality of fuel injectors 500 may be distributed at various axial and circumferential locations along the duct section 30. Each respective fuel injector 500 of the plurality of fuel injectors 500 is fluidly coupled to a fuel supply 58 and penetrates through the duct section 30 so as to direct a secondary flow of fuel-air 60 substantially radially inwardly or substantially perpendicular to the flow of combustion gases 26 flowing from the primary combustion zone 42 within the hot gas path 38. The fuel supply 58 may supply a gas fuel, a liquid fuel or both a gas and a liquid fuel to the fuel injectors 500.

In various embodiments, the plurality of fuel injectors 500 may be distributed along any one of the cylindrical duct 100, the conical duct 200, the intermediate duct 400, the exit piece 300 or any combination thereof. For example, in one embodiment, the plurality of fuel injectors 500 is distributed across the cylindrical duct 100. In one embodiment, the plurality of fuel injectors 500 is distributed across the conical duct 200. In one embodiment, at least one fuel injector 500 of the plurality of fuel injectors 500 is distributed across the inlet exit piece 300. In one embodiment, as shown in FIG. 5, the plurality of fuel injectors 500 is distributed across the intermediate duct 400.

In one embodiment, as illustrated in FIGS. 3 through 6 collectively, one or more fuel injectors 502 of the plurality of fuel injectors 500 is distributed along the inlet exit piece 300 and provides for fluid communication of the secondary fuel-air mixture 60 through the inlet exit piece 300 and into the hot gas path 38. At least one fuel injector 502 of the plurality of fuel injectors 500 may be distributed along one or more of the inlet chamber 304, the radially extending side wall 310 of the connection segment 308, the aft extending inner wall 312 of the connection segment 308, the aft extending outer wall 314 of the connection segment 308, and the connection flange 316 of the connection segment 308.

In one embodiment, at least one fuel injector 502 of the plurality of fuel injectors 500 is positioned along the inlet chamber 304. In one embodiment, at least one fuel injector 500 of the plurality of fuel injectors 500 is positioned along the radially extending side wall 310 of the connection segment 308. In one embodiment, at least one fuel injector 502 of the plurality of fuel injectors 500 is positioned along the aft extending inner wall 312 of the connection segment 308. In one embodiment, at least one fuel injector 502 of the plurality of fuel injectors 500 is positioned along the aft extending outer wall 314 of the connection segment 308. In one embodiment, at least one fuel injector 502 of the plurality of fuel injectors 500 is positioned along the connection flange 316 of the connection segment 308.

In particular embodiments, as illustrated in FIGS. 3 through 6 collectively, one or more fuel injectors 504 of the plurality of fuel injectors 500 is distributed along conical duct 200 and provides for fluid communication of the secondary fuel-air mixture 60 through the conical duct 200 and into the hot gas path 38. The one or more fuel injectors 504 of the plurality of fuel injectors 500 distributed along the conical duct 200 may be circumferentially spaced and/or axially spaced about the conical duct 200 with respect to the axial centerline 44 of the respective duct section 30.

As illustrated in FIGS. 3 through 6 collectively, one or more fuel injectors 506 of the plurality of fuel injectors 500 are distributed along the cylindrical duct 100 and provide for fluid communication of the secondary fuel-air mixture 60 through the cylindrical duct 100 and into the hot gas path 38. The one or more fuel injectors 506 disposed along the cylindrical duct 100 may be circumferentially spaced and/or axially spaced about the cylindrical duct 100 with respect to the axial centerline 44 of the respective duct section 30.

In particular embodiments, as illustrated in FIGS. 5 and 6 collectively, one or more fuel injectors 508 of the plurality of fuel injectors 500 may be distributed along the intermediate duct 400 and provide for fluid communication of the secondary fuel-air mixture 60 through the intermediate duct 400 and into the hot gas path 38. The one or more fuel injectors 508 disposed along the intermediate duct 400 may be circumferentially spaced and/or axially spaced about the intermediate duct 400 with respect to the axial centerline 44 of the respective duct section 30.

Advantageously, the fuel injectors 500, 502, 504, 506, 508 provide the ability to reduce undesirable emissions generated during the combustion process, while providing flexibility to the overall combustion section 14. Axially staged or late lean injection can also allow for an injection of multiple gas streams, including alternate gases, such as refinery gases, into the hot gas path 38 that non-axially staged combustions systems are generally unable to handle.

## Claims

1. A duct section (30) of a combustor section (14) including an axially staged combustion system, the duct section (30) comprising:
an axially oriented primary fuel nozzle (40);
a primary combustion zone (42) defined within a first duct (100) downstream from the primary fuel nozzle (40);
a conical duct (200) disposed downstream from the primary combustion zone (42), the conical duct (200) receiving an aft end (102) of the cylindrical duct (100);
an integrated exit piece (300) disposed downstream from the conical duct (200), wherein the first duct (100), the conical duct (200), and the integrated exit piece (300) at least partially form a hot gas path (38) of the duct section (30);
a plurality of fuel injectors (502, 504, 506) oriented radially inwardly with respect to an axial centerline of the duct section (30) and disposed downstream from the primary combustion zone (42), wherein each fuel injector (502, 504, 506) of the plurality of fuel injectors (502, 504, 506) provides for injection of a secondary fuel-air mixture into the hot gas path (38), wherein one or more fuel injectors (502, 504) of the plurality of fuel injectors (502, 504, 506) is distributed along at least one of the conical duct (200) and the integrated exit piece (300), **characterized in that** the first duct (100) is a cylindrical duct and at least one fuel injector (506) of the plurality of fuel injectors is disposed along the cylindrical duct (100).

2. The duct section (30) as in claim 1, wherein fuel injectors (504) of the plurality of fuel injectors (502, 504, 506) are disposed along the conical duct (200).

3. The duct section (30) as in claim 1, wherein the integrated exit piece (300) comprises a connection segment (308) including a radially extending side wall (310), an aft extending inner wall (312), an aft extending outer wall (314) and a flange (316).

4. The duct section (30) as in claim 3, wherein at least one fuel injector (502) of the plurality of fuel injectors (502, 504, 506) is disposed along the radially extending side wall (310) of the connection segment (308).

5. The duct section (30) as in claim 3, wherein at least one fuel injector (502) of the plurality of fuel injectors (502, 504, 506) is disposed along the aft extending inner wall (312) of the connection segment (308).

6. The duct section (30) as in claim 3, wherein at least one fuel injector (502) of the plurality of fuel injectors (502, 504, 506) is disposed along the aft extending outer wall (314) of the connection segment (308).

7. The duct section (30) as in claim 3, wherein at least one fuel injector (502) of the plurality of fuel injectors (502, 504, 506) is disposed along the flange (316) of the connection segment (308).

8. The duct section (30) as in claim 1, further comprising an intermediate duct (400) disposed between an aft end of the conical duct (200) and the integrated exit piece (300), wherein the intermediate duct (400) further defines the hot gas path (38), and wherein at least one fuel injector (502) of the plurality of fuel injectors (502, 504, 506) is disposed along the intermediate duct (400).

9. A combustion section (14), comprising:
a plurality of duct sections (30) annularly arranged about a common axial centerline, each duct section (30) being defined according to any of the preceding claims.

## Patentansprüche

1. Kanalabschnitt (30) eines Brennkammerabschnitts (14), der ein axial gestuftes Verbrennungssystem einschließt, der Kanalabschnitt (30) umfassend:
eine axial ausgerichtete primäre Kraftstoffdüse (40);
eine primäre Verbrennungszone (42), die innerhalb eines ersten Kanals (100) stromabwärts der primären Kraftstoffdüse (40) definiert ist;
einen konischen Kanal (200), der stromabwärts von der primären Verbrennungszone (42) angeordnet ist, wobei der konische Kanal (200) ein hinteres Ende (102) des zylindrischen Kanals (100) aufnimmt;
ein integriertes Austrittsstück (300), das stromabwärts von dem konischen Kanals (200) angeordnet ist, wobei der erste Kanal (100), der konische Kanal (200) und das integrierte Austrittsstück (300) mindestens teilweise einen Heißgaspfad (38) des Kanalabschnitts (30) ausbilden;
eine Vielzahl von Kraftstoffeinspritzern (502, 504, 506), die in Bezug auf eine axiale Mittellinie des Kanalabschnitts (30) radial nach innen ausgerichtet und stromabwärts von der primären Verbrennungszone (42) angeordnet sind, wobei jeder Kraftstoffeinspritzer (502, 504, 506) der Vielzahl von Kraftstoffeinspritzern (502, 504, 506) eine Einspritzung eines sekundären Kraftstoff-Luft-Gemischs in den Heißgaspfad (38) bereitstellt, wobei ein oder mehrere Kraftstoffeinspritzer (502, 504) der Vielzahl von Kraftstoffeinspritzern (502, 504, 506) entlang mindestens eines des konischen Kanals (200) und des integrierten Austrittsstücks (300) verteilt sind, **dadurch gekennzeichnet, dass** der erste Kanal (100) ein zylindrischer Kanal ist und mindestens ein Kraftstoffeinspritzer (506) der Vielzahl von Kraftstoffeinspritzern entlang des zylindrischen Kanals (100) angeordnet ist.

2. Kanalabschnitt (30) nach Anspruch 1, wobei Kraftstoffeinspritzer (504) der Vielzahl von Kraftstoffeinspritzern (502, 504, 506) entlang des konischen Kanals (200) angeordnet sind.

3. Kanalabschnitt (30) nach Anspruch 1, wobei das integrierte Austrittsstück (300) ein Verbindungssegment (308) umfasst, das eine sich radial erstreckende Seitenwand (310), eine hintere sich erstreckende Innenwand (312), eine hintere sich erstreckende Außenwand (314) und einen Flansch (316) einschließt.

4. Kanalabschnitt (30) nach Anspruch 3, wobei mindestens ein Kraftstoffeinspritzer (502) der Vielzahl von Kraftstoffeinspritzern (502, 504, 506) entlang der sich radial erstreckenden Seitenwand (310) des Verbindungssegments (308) angeordnet ist.

5. Kanalabschnitt (30) nach Anspruch 3, wobei mindestens ein Kraftstoffeinspritzer (502) der Vielzahl von Kraftstoffeinspritzern (502, 504, 506) entlang der hinteren sich erstreckenden Innenwand (312) des Verbindungssegments (308) angeordnet ist.

6. Kanalabschnitt (30) nach Anspruch 3, wobei mindestens ein Kraftstoffeinspritzer (502) der Vielzahl von Kraftstoffeinspritzern (502, 504, 506) entlang der hinteren sich erstreckenden Außenwand (314) des Verbindungssegments (308) angeordnet ist.

7. Kanalabschnitt (30) nach Anspruch 3, wobei mindestens ein Kraftstoffeinspritzer (502) der Vielzahl von Kraftstoffeinspritzern (502, 504, 506) entlang des Flansches (316) des Verbindungssegments (308) angeordnet ist.

8. Kanalabschnitt (30) nach Anspruch 1, ferner umfassend einen Zwischenkanal (400), der zwischen einem hinteren Ende des konischen Kanals (200) und dem integrierten Austrittsstück (300) angeordnet ist, wobei der Zwischenkanal (400) ferner den Heißgaspfad (38) definiert, und wobei mindestens ein Kraftstoffeinspritzer (502) der Vielzahl von Kraftstoffeinspritzern (502, 504, 506) entlang des Zwischenkanals (400) angeordnet ist.

9. Brennkammerabschnitt (14), umfassend:
eine Vielzahl von Kanalabschnitten (30), die um eine gemeinsame axiale Mittellinie ringförmig eingerichtet sind, wobei jeder Kanalabschnitt (30) nach einem der vorstehenden Ansprüche definiert ist.

## Revendications

1. Section de conduit (30) d'une section de chambre de combustion (14) comportant un système de combustion étagé axialement, la section de conduit (30) comprenant :
une buse de carburant primaire orientée axialement (40) ;
une zone de combustion primaire (42) définie au sein d'un premier conduit (100) en aval de la buse de carburant primaire (40) ;
un conduit conique (200) disposé en aval de la zone de combustion primaire (42), le conduit conique (200) recevant une extrémité arrière (102) du conduit cylindrique (100) ;
une pièce de sortie intégrée (300) disposée en aval du conduit conique (200), dans laquelle le premier conduit (100), le conduit conique (200), et la pièce de sortie intégrée (300) forment au moins partiellement un trajet de gaz chaud (38) de la section de conduit (30) ;
une pluralité d'injecteurs de carburant (502, 504, 506) orientés radialement vers l'intérieur par rapport à une ligne médiane axiale de la section de conduit (30) et disposés en aval de la zone de combustion primaire (42), dans laquelle chaque injecteur de carburant (502, 504, 506) de la pluralité d'injecteurs de carburant (502, 504, 506) fournit une injection d'un mélange de carburant-air secondaire dans le trajet de gaz chaud (38), dans laquelle un ou plusieurs injecteurs de carburant (502, 504) de la pluralité d'injecteurs de carburant (502, 504, 506) sont répartis le long d'au moins l'un parmi le conduit conique (200) et la pièce de sortie intégrée (300), **caractérisée en ce que** le premier conduit (100) est un conduit cylindrique et au moins un injecteur de carburant (506) de la pluralité d'injecteurs de carburant est disposé le long du conduit cylindrique (100).

2. Section de conduit (30) selon la revendication 1, dans laquelle des injecteurs de carburant (504) de la pluralité d'injecteurs de
carburant (502, 504, 506) sont disposés le long du conduit conique (200).

3. Section de conduit (30) selon la revendication 1, dans laquelle la pièce de sortie intégrée (300) comprend un segment de liaison (308) comportant une paroi latérale s'étendant radialement (310), une paroi interne s'étendant vers l'arrière (312), une paroi externe s'étendant vers l'arrière (314) et une bride (316).

4. Section de conduit (30) selon la revendication 3, dans laquelle au moins un injecteur de carburant (502) de la pluralité d'injecteurs de
carburant (502, 504, 506) est disposé le long de la paroi latérale s'étendant radialement (310) du segment de liaison (308).

5. Section de conduit (30) selon la revendication 3, dans laquelle au moins un injecteur de carburant (502) de la pluralité d'injecteurs de carburant (502, 504, 506) est disposé le long de la paroi interne s'étendant vers l'arrière (312) du segment de liaison (308).

6. Section de conduit (30) selon la revendication 3, dans laquelle au moins un injecteur de carburant (502) de la pluralité d'injecteurs de carburant (502, 504, 506) est disposé le long de la paroi externe s'étendant vers l'arrière (314) du segment de liaison (308).

7. Section de conduit (30) selon la revendication 3, dans laquelle au moins un injecteur de carburant (502) de la pluralité d'injecteurs de carburant (502, 504, 506) est disposé le long de la bride (316) du segment de liaison (308).

8. Section de conduit (30) selon la revendication 1, comprenant en outre un conduit intermédiaire (400) disposé entre une extrémité arrière du conduit conique (200) et la pièce de sortie intégrée (300), dans laquelle le conduit intermédiaire (400) définit en outre le trajet de gaz chaud (38), et dans laquelle au moins un injecteur de carburant (502) de la pluralité d'injecteurs de carburant (502, 504, 506) est disposé le long du conduit intermédiaire (400).

9. Section de combustion (14), comprenant :
une pluralité de sections de conduit (30) agencées de manière annulaire autour d'une ligne médiane axiale commune, chaque section de conduit (30) étant définie selon l'une quelconque des revendications précédentes.
